# EUROPEAN PATENT APPLICATION

(11) **EP 4 418 431 A1**
(43) Date of publication of application: **21.08.2024**
(21) Application number: 22905952.2
(22) Date of filing: 01.09.2022
(51) Int. Cl.: H01M 50/342, H01M 50/147

(54) **EXPLOSION-PROOF VALVE, TOP COVER ASSEMBLY, AND BATTERY**

(30) Priority: 17.12.2021 CN 202123183893 U
(71) Applicant: Sunwoda Mobility Energy Technology Co., Ltd., Shenzhen, Guangdong 518000 (CN)
(72) Inventor: LIN, Jian, Shenzhen, Guangdong 518000 (CN); HU, Chunbo, Shenzhen, Guangdong 518000 (CN); LIN, Xiude, Shenzhen, Guangdong 518000 (CN); YANG, Wei, Shenzhen, Guangdong 518000 (CN); ZHANG, Yao, Shenzhen, Guangdong 518000 (CN)
(74) Representative: Range, Christopher William
(86) International application number: PCT/CN2022/116569
(87) International publication number: WO 2023/109196

(57) **Abstract**

The present application belongs to the technical field of power batteries, in particular to an explosion-proof valve, a top cover assembly and a battery. The explosion-proof valve includes a mounting part and a body part, the mounting part is arranged on a peripheral edge of the body part, the body part includes a weak part and a first buffer part, and the weak part is arranged between the mounting part and the first buffer part or the weak part is arranged on the first buffer part. The weak part is located at a position with a minimum explosive pressure on the explosion-proof valve, and is configured to open the explosion-proof valve when an air pressure in an inner space of the top cover assembly reaches an opening threshold of the explosion-proof valve. When the explosion-proof valve provided by the present application is influenced by external factors which are easy to cause stress concentration in the weak part, the first buffer part can generate flexible deformation, so as to provide a certain amount of flexible deformation to buffer the weak part, thereby avoiding excessive stress in the weak part, weakening the impact on the explosion-proof valve, ensuring application reliability of the explosion-proof valve and achieving a purpose of prolonging a service life of the explosion-proof valve.

## Description

### TECHNICAL FIELD

The present application belongs to the technical field of power batteries, and particularly to an explosion-proof valve, a top cover assembly and a battery.

### BACKGROUND

At present, a battery cell of a power battery is generally installed with an explosion-proof valve to realize that when an internal pressure of the battery cell reaches an opening threshold of the explosion-proof valve, the explosion-proof valve will be opened to release the pressure to avoid the explosion of the battery cell. As a key functional component, the explosion-proof valve has a good explosion-proof effect when the battery cells are misused, which can ensure the safety of an electric vehicle using the power battery as an energy source, and the functional reliability of the explosion-proof valve has attracted more and more attention.

On one hand, in the preparation process of a battery cell, several procedures may have certain negative effects on the explosion-proof valve. For example, ultrasonic welding of pins to bare cell, XY compression during installation of a top cover to a shell, laser welding of the top cover to the shell, alternating positive and negative pressure during liquid injection and high temperature baking are all easy to form stress concentration in a weak explosive area of the explosion-proof valve. On the other hand, in a battery cell application scenario, the internal pressure caused by vibration, impact and internal gas production acts on the explosion-proof valve, which is also easy to form stress concentration in the weak explosive area of the explosion-proof valve. In the above two exemplary cases, the stress concentration formed in the weak explosive area of the explosion-proof valve may affect long-term reliability of the explosion-proof valve, and even cause rapid fatigue of the explosion-proof valve and reduce a service life of the explosion-proof valve.

### SUMMARY

The technical problem to be addressed by the present application is: to provide an explosion-proof valve, a top cover assembly and a battery aiming at the problem in the prior art that stress concentration formed in a weak explosive area of an explosion-proof valve may affect long-term reliability of the explosion-proof valve, and even cause rapid fatigue of the explosion-proof valve and reduce a service life of the explosion-proof valve.

In order to solve the above technical problem, an embodiment of the present application provides an explosion-proof valve, including a mounting part and a body part, wherein the mounting part is arranged on a peripheral edge of the body part and the mounting part is configured for hermetically connecting the explosion-proof valve to a top cover assembly;
the body part includes a weak part and a first buffer part, the weak part is arranged between the mounting part and the first buffer part, or the weak part is arranged on the first buffer part; and
the weak part is located at a position with a minimum explosive pressure on the explosion-proof valve, and is configured to open the explosion-proof valve when an air pressure in an inner space of the top cover assembly reaches an opening threshold of the explosion-proof valve.

Optionally, the first buffer part has a convex hull structure formed on the body part and protruding along a thickness direction of the explosion-proof valve.

Optionally, a range of an included angle formed by a side part of the convex hull structure and a top of the convex hull structure is a closed interval of 90° to 180°.

Optionally, a wall thickness of a side part of the convex hull structure is not greater than a maximum wall thickness of the body part.

Optionally, a wall thickness of a side part of the convex hull structure decreases uniformly from one end of the side part of the convex hull structure facing away from a top of the convex hull structure to one end of the side part of the convex hull structure close to the top of the convex hull structure.

Optionally, a wall thickness of a side part of the convex hull structure is not greater than a wall thickness of a top of the convex hull structure.

Optionally, when the weak part is arranged between the mounting part and the first buffer part, the body part further includes a connecting part, the connecting part is arranged between the weak part and the first buffer part, and the first buffer part has a thin-walled structure with a wall thickness smaller than that of the connecting part.

Optionally, the body part further includes a second buffer part, the second buffer part is arranged between the weak part and the mounting part, and the second buffer part has a flexibly deformable structure.

Optionally, the body part further includes a third buffer part, and the third buffer part has a convex hull structure formed in an area surrounded by the first buffer part on the body part and protruding along the thickness direction of the explosion-proof valve.

In the explosion-proof valve according to the embodiments of the present application, the weak part is arranged between the mounting part and the first buffer part, or the weak part is directly arranged on the first buffer part. When the explosion-proof valve is influenced by external factors which are easy to cause stress concentration in the weak part in the preparation process or in the application scene, the first buffer part can generate flexible deformation, so as to provide a certain amount of flexible deformation to buffer the weak part, thereby avoiding excessive stress in the weak part of the explosion-proof valve, weakening the impact on the explosion-proof valve, ensuring application reliability of the explosion-proof valve and preventing the explosion-proof valve from rapidly fatiguing due to the influence, thus achieving a purpose of prolonging a service life of the explosion-proof valve.

Moreover, when the weak part is arranged between the mounting part and the first buffer part, the first buffer part is located in an area surrounded by the weak part, and the area surrounded by the weak part is also a middle area of the explosion-proof valve. In this case, the first buffer part can especially reduce the influence on the middle area of the explosion-proof valve and reduce the deformation of the middle area of the explosion-proof valve in the thickness direction, so as to better improve the stability of the opening threshold of the explosion-proof valve.

In another aspect, an embodiment of the present application further provides a cover assembly, wherein the top cover assembly includes a top cover and the explosion-proof valve above, the top cover is provided with an explosion-proof hole matched with the mounting part, and the mounting part is mounted in the explosion-proof hole to hermetically connect the explosion-proof valve to the top cover.

Optionally, the explosion-proof hole is a stepped hole, the mounting part is an annular boss matched with the stepped hole, and a thickness of the annular boss ranges from 0.1 mm to 2.0 mm.

Optionally, a thickness of the annular boss ranges from 0.3 mm to 1.0 mm.

In the top cover assembly according to the embodiments of the present application, as the improved explosion-proof valve above is mounted on the top cover, when the explosion-proof valve is influenced by external factors which are easy to cause stress concentration in the weak part in the preparation process or in the application scene, the first buffer part can generate flexible deformation, so as to provide a certain amount of flexible deformation to buffer the weak part, thereby avoiding excessive stress in the weak part of the explosion-proof valve, weakening the impact on the explosion-proof valve, ensuring application reliability of the explosion-proof valve and preventing the explosion-proof valve from rapidly fatiguing due to the influence, thus achieving a purpose of prolonging a service life of the explosion-proof valve.

In yet another aspect, an embodiment of the present application further provides a battery, wherein the battery includes a shell, a battery cell wrapped by the shell, and the top cover assembly above for sealing the shell, a positive electrode terminal and a negative electrode terminal are mounted on the top cover, the battery cell includes a positive plate, a negative plate and a diaphragm arranged between the positive plate and the negative plate, and the positive electrode terminal and the negative electrode terminal are respectively configured for electrically connecting the positive plate and the negative plate of the battery cell.

In the battery according to the embodiments of the present application, as the battery includes the improved explosion-proof valve above, when the explosion-proof valve is influenced by external factors which are easy to cause stress concentration in the weak part in the preparation process or in the application scene, the first buffer part can generate flexible deformation, so as to provide a certain amount of flexible deformation to buffer the weak part, thereby avoiding excessive stress in the weak part of the explosion-proof valve, weakening the impact on the explosion-proof valve, ensuring application reliability of the explosion-proof valve and preventing the explosion-proof valve from rapidly fatiguing due to the influence. Finally, the service life and application reliability of the battery are also improved.

### BRIEF DESCRIPTION OF THE DRAWINGS

FIG. 1 is a structural schematic diagram of an explosion-proof valve provided by a first embodiment of the present application;
FIG. 2 is a schematic sectional view taken along a direction A-A in FIG. 1;
FIG. 3 is a structural schematic diagram of an explosion-proof valve provided by a second embodiment of the present application;
FIG. 4 is a schematic sectional view taken along a direction B-B in FIG. 3;
FIG. 5 is a structural schematic diagram of an explosion-proof valve provided by a third embodiment of the present application;
FIG. 6 is a schematic sectional view taken along a direction C-C in FIG. 5;
FIG. 7 is a structural schematic diagram of an explosion-proof valve provided by a fourth embodiment of the present application;
FIG. 8 is a schematic sectional view taken along a direction D-D in FIG. 7;
FIG. 9 is a structural schematic diagram of an explosion-proof valve provided by a fifth embodiment of the present application;
FIG. 10 is a schematic sectional view taken along a direction E-E in FIG. 9;
FIG. 11 is an exploded view of a top cover assembly provided by a sixth embodiment of the present application;
FIG. 12 is a structural schematic diagram of the top cover assembly provided by the sixth embodiment of the present application;
FIG. 13 is a schematic sectional view taken along a direction F-F in FIG. 12;
FIG. 14 is a partial enlarged view of a part G in FIG. 13; and
FIG. 15 is a structural schematic diagram of a battery provided by a seventh embodiment of the present application.

The reference numerals in the specification are as follows:
100 refers to explosion-proof valve; 110 refers to mounting part; 120 refers to body part; 121 refers to a first buffer part; 122 refers to a second buffer part; 123 refers to third buffer part; 124 refers to weak part; 125 refers to connecting part; 200 refers to top cover; 210 refers to explosion-proof hole; 300 refers to explosion-proof valve protective diaphragm; 400 refers to positive electrode terminal; 500 refers to negative electrode terminal; and 600 refers to shell.

### DETAILED DESCRIPTION

To make the technical problems addressed, technical solutions, and beneficial effects of the present application clearer, the present application will be further explained in detail with reference to the drawings and embodiments. It should be understood that the specific embodiments described herein are merely illustrative of the present application and are not intended to limit the present application.

In the description of the present application, it should be understood that the orientation or positional relationship indicated by the terms "top", "side", "inner", "outer", "front ", "rear", and the like is based on the orientation or positional relationship shown in the drawings, which is only for the convenience of describing the present application and simplifying the description, rather than to indicate or imply that the indicated device or element must have a specific orientation, be constructed and operate in a specific orientation. Therefore, such terms should not be construed as limiting the present application. Moreover, the terms "first", "second", "third", and the like are used for descriptive purposes only and cannot be understood as indicating or implying relative importance.

### First embodiment

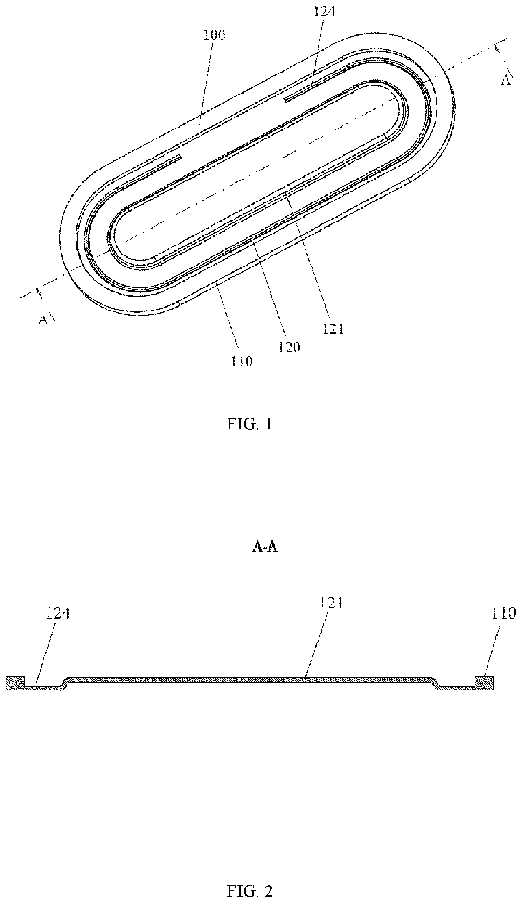

As shown in FIGs. 1 and 2, an explosion-proof valve 100 provided by the first embodiment of the present application includes a mounting part 110 and a body part 120, wherein the mounting part 110 is arranged on a peripheral edge of the body part 120 and the mounting part 110 is configured for hermetically connect the explosion-proof valve 100 to a top cover assembly. The body part 120 includes a weak part 124 and a first buffer part 121, and the weak part 124 is arranged between the mounting part 110 and the first buffer part 121. The weak part 124 is located at a position with a minimum explosive pressure on the explosion-proof valve 100, and the weak part 124 is configured to open the explosion-proof valve 100 when an air pressure in an inner space of the top cover assembly reaches an opening threshold of the explosion-proof valve 100 to release gas in the inner space of the top cover assembly to prevent explosion. The first buffer part 121 is a flexibly deformable structure.

The weak part 124 is a notch provided on the body part 120. An overall outer contour of the explosion-proof valve 100 is racetrack-shaped, and the notch is also set in a shape similar to the racetrack, so that the weak part 124 can more easily open the explosion-proof valve 100 through the notch when the air pressure in the inner space of the top cover assembly reaches the opening threshold of the explosion-proof valve 100. The notch is not a closed ring, and the body part 120 includes a section for cutting off the notch to avoid a structural strength of the weak part 124 from being too low.

In the first embodiment, the first buffer part 121 is in a convex hull structure formed on the body part 120 and protruding toward a front side of the explosion-proof valve 100 in a thickness direction of the explosion-proof valve 100. Because the protruding direction of the first buffer part 121 does not affect the flexible deformation ability thereof, the first buffer part 121 may also be set to protrude toward a back side of the explosion-proof valve 100. The convex hull structure may be formed by stamping on the body part 120, or by other easily realized processing methods.

When the explosion-proof valve 100 is deformed by compression, thermal influence or air pressure in the top cover assembly, the first buffer part 121 can provide a certain amount of flexible deformation to avoid excessive stress in the weak part 124 and prolong the service life of the explosion-proof valve 100. When the explosion-proof valve 100 is subjected to vibration, impact or abnormal drop, the first buffer part 121 can provide a certain degree of flexible buffer to weaken the impact on the explosion-proof valve 100 and ensure the application reliability of the explosion-proof valve 100.

Moreover, because the weak part 124 is arranged between the mounting part 110 and the first buffer part 121, that is, the first buffer part 121 is located in an area surrounded by the weak part 124, and the area surrounded by the weak part 124 is also a middle area of the explosion-proof valve 100, which makes the first buffer part 121 particularly reduce the deformation of the middle area of the explosion-proof valve 100 towards an outer surface or an inner surface in the thickness direction.

When the explosion-proof valve 100 is mounted on a top cover assembly of a battery, gas generated by a battery cell inside the battery may diffuse to the explosion-proof valve 100, so that the explosion-proof valve 100 can bear the gas pressure inside the battery. The body part 120 is directly connected with the mounting part 110 at a part outside the peripheral edge of the weak part 124, and the mounting part 110 has a larger thickness and higher structural strength. Therefore, even when the explosion-proof valve 100 is subjected to a larger air pressure or the air pressure inside fluctuates, the stability of the body part 120 at the part outside the peripheral edge of the weak part 124 is higher than that of the part of the body part 120 in the area surrounded by the weak part 124. Therefore, setting the first buffer part 121 in the area surrounded by the weak part 124 can better protect the part of the body part 120 in the area surrounded by the weak part 124, thus better improving the stability of the opening threshold of the whole explosion-proof valve 100.

In the first embodiment, a range of an included angle formed by a side part of the convex hull structure and a top of the convex hull structure is a closed interval of 90° to 180°.

Preferably, the included angle formed by the side part of the convex hull structure and the top of the convex hull structure is in a closed interval of 135° to 175°. Limiting the convex hull structure within this range enables the first buffer part 121 to better meet the flexible buffer requirements of the explosion-proof valve 100.

In the first embodiment, a wall thickness of a side part of the convex hull structure is not greater than a maximum wall thickness of the body part (not shown in the figure), so that the convex hull structure is more prone to flexible deformation when the explosion-proof valve is influenced by external factors which tend to be easy to cause stress concentration in the weak part.

Moreover, the wall thickness of the side part of the convex hull structure and the wall thickness of the top of the convex hull structure may have the following two forms of size relationship:
First relationship: the wall thickness of the side part of the convex hull structure is designed to decrease uniformly from one end of the side part of the convex hull structure facing away from the top of the convex hull structure to one end of the side part of the convex hull structure close to the top of the convex hull structure, and the wall thickness of the top of the convex hull structure is designed to be a minimum wall thickness of the convex hull structure.

Second relationship: the side part of the convex hull structure is thinned to make the wall thickness of the side part of the convex hull structure smaller than that of the top of the convex hull structure. In this case, it is not limited that the wall thickness of the side part of the convex hull structure changes uniformly.

In the explosion-proof valve provided by the first embodiment of the present application, the weak part is arranged between the mounting part and the first buffer part, and the first buffer part has a convex hull structure that can be flexibly deformed. When the explosion-proof valve is influenced by external factors which are easy to cause stress concentration in the weak part in the preparation process or in the application scene, the first buffer part can generate flexible deformation, so as to provide a certain amount of flexible deformation to buffer the weak part, thereby avoiding excessive stress in the weak part, weakening the impact on the explosion-proof valve, ensuring application reliability of the explosion-proof valve and preventing the explosion-proof valve from rapidly fatiguing due to the influence, thus achieving a purpose of prolonging a service life of the explosion-proof valve.

### Second embodiment

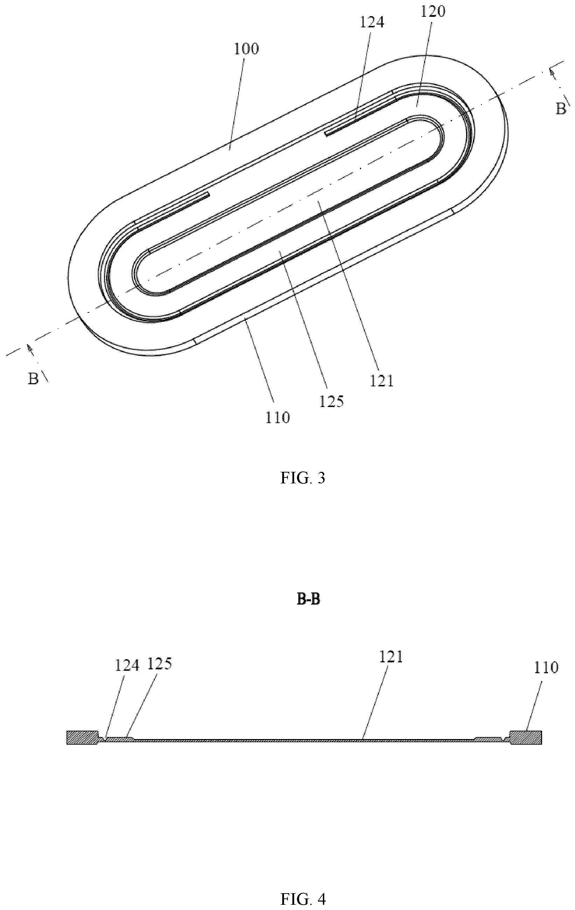

As shown in FIGs. 3 and 4, the second embodiment of the present application provides an explosion-proof valve, which is different from the first embodiment in that the weak part 124 is arranged between the mounting part 110 and the first buffer part 121, the body part 120 further includes a connecting part 125, and a wall thickness of the connecting part 125 is a maximum wall thickness of the body part. The connecting part 125 is arranged between the weak part 124 and the first buffer part 121, and the first buffer part 121 has a thin-walled structure with a wall thickness smaller than that of the connecting part 125.

In the explosion-proof valve provided by the second embodiment of the present application, the first buffer part has a thin-walled structure with a wall thickness smaller than that of the connecting part. When the explosion-proof valve provided by the application is influenced by external factors which are easy to cause stress concentration in the weak part, the first buffer part can still generate flexible deformation, so as to provide a certain amount of flexible deformation to buffer the weak part, thereby avoiding excessive stress in the weak part, weakening the impact on the explosion-proof valve, ensuring application reliability of the explosion-proof valve and achieving a purpose of prolonging a service life of the explosion-proof valve. Moreover, the first buffer part with the thin-walled structure can also reduce a weight of the explosion-proof valve, so that a mass energy density of a battery with the explosion-proof valve is improved.

### Third embodiment

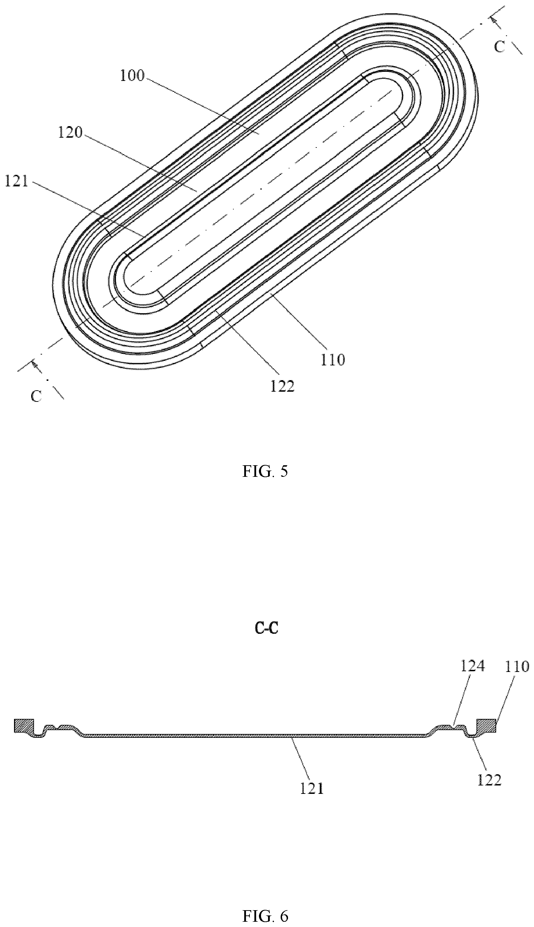

As shown in FIGs. 5 and 6, the third embodiment of the present application provides an explosion-proof valve, which is different from the first embodiment in that the body part 120 further includes a second buffer part 122, and the second buffer part 122 is arranged between the weak part 124 and the mounting part 110. The first buffer part 121 has a convex hull structure formed on the body part 120 and protruding towards a back side of the explosion-proof valve 100 along a thickness direction of the explosion-proof valve 100. The second buffer part 122 has a convex hull structure formed on the body part 120 with the same orientation as that of the first buffer part 121.

According to the explosion-proof valve provided by the third embodiment of the present application, by additionally setting the second buffer between the weak part and the mounting part, the second buffer part and the first buffer part can jointly generate flexible deformation when the explosion-proof valve is influenced by external factors which are easy to cause stress concentration in the weak part, thus providing a certain amount of flexible deformation. Both the second buffer part and the first buffer part can generate flexible deformation, which can better buffer the weak part, thus avoiding excessive stress in the weak part of the explosion-proof valve, ensuring application reliability of the explosion-proof valve and achieving a purpose of prolonging the service life of the explosion-proof valve.

### Fourth embodiment

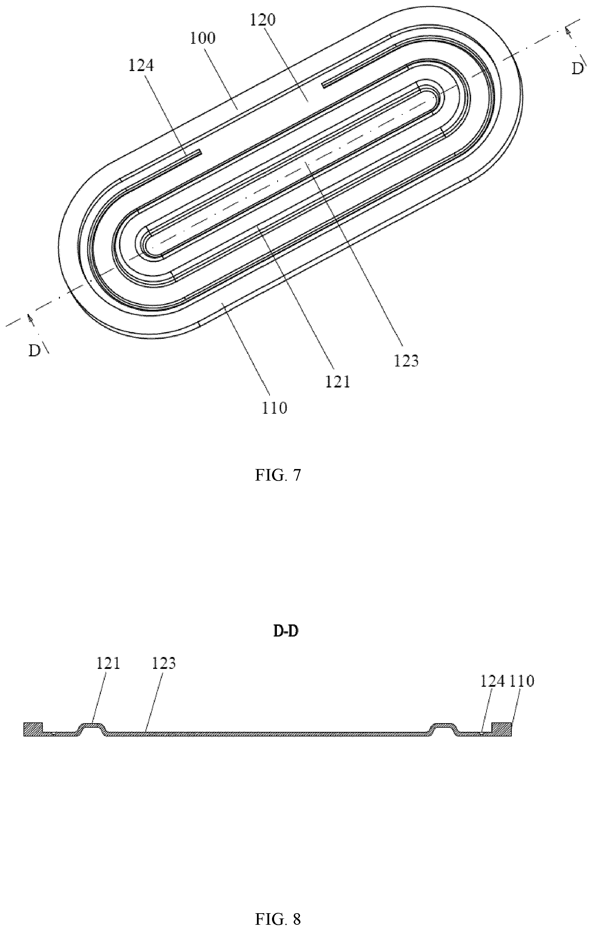

As shown in FIGs. 7 and 8, the fourth embodiment of the present application provides an explosion-proof valve, which is different from the first embodiment in that the body part further includes a third buffer part 123, and the third buffer part 123 has a convex hull structure formed in an area surrounded by the first buffer part 121 on the body part 120 and protruding along the thickness direction of the explosion-proof valve 100.

As shown in FIGs. 7 and 8, an orientation of the third buffer part 123 is opposite to that of the first buffer part 121, the first buffer part 121 faces the front side of the explosion-proof valve 100, while the third buffer part 123 faces the back side of the explosion-proof valve 100. In the process of processing the first buffer part 121, the first buffer part 121 is formed into an annular convex hull structure. In this case, a plane structure of the body part 120 in the area surrounded by the first buffer part 121 and an inner ring surface of the annular first buffer part 121 together form a concave area, which has a convex hull structure oriented oppositely to the first buffer part 121, that is, the third buffer part 123.

In the explosion-proof valve provided by the fourth embodiment of the present application, the third buffer part is arranged in the area surrounded by the first buffer part, so that a double buffer structure is formed in the area surrounded by the weak part. When the explosion-proof valve provided by the present application is influenced by external factors which are easy to cause stress concentration in the weak part, the third buffer part and the first buffer part can both generate flexible deformation, provide a certain amount of flexible deformation, and can play a buffering role in the weak part, thereby avoiding excessive stress in the weak part, weakening the impact on the explosion-proof valve, ensuring application reliability of the explosion-proof valve and achieving a purpose of prolonging a service life of the explosion-proof valve.

### Fifth embodiment

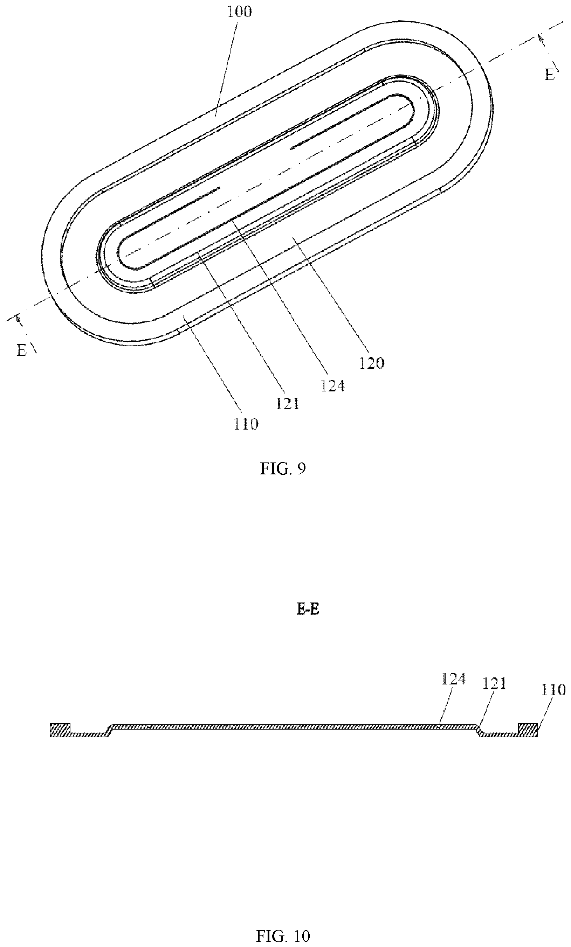

As shown in FIGs. 9 and 10, the fifth embodiment of the present application provides an explosion-proof valve, which is different from the first embodiment in that the weak part 124 is arranged on the first buffer part 121.

In the explosion-proof valve provided by the fifth embodiment of the present application, the weak part is directly arranged on the first buffer part. When the explosion-proof valve provided by the application is influenced by external factors which are easy to cause stress concentration in the weak part, the first buffer part can generate flexible deformation, so as to provide a certain amount of flexible deformation to buffer the weak part, thereby avoiding excessive stress in the weak part, weakening the impact on the explosion-proof valve, ensuring application reliability of the explosion-proof valve and achieving a purpose of prolonging a service life of the explosion-proof valve. Because the weak part is directly arranged on the first buffer part, the flexible deformation of the first buffer part can have better effect in weakening the stress of the weak part.

### Sixth embodiment

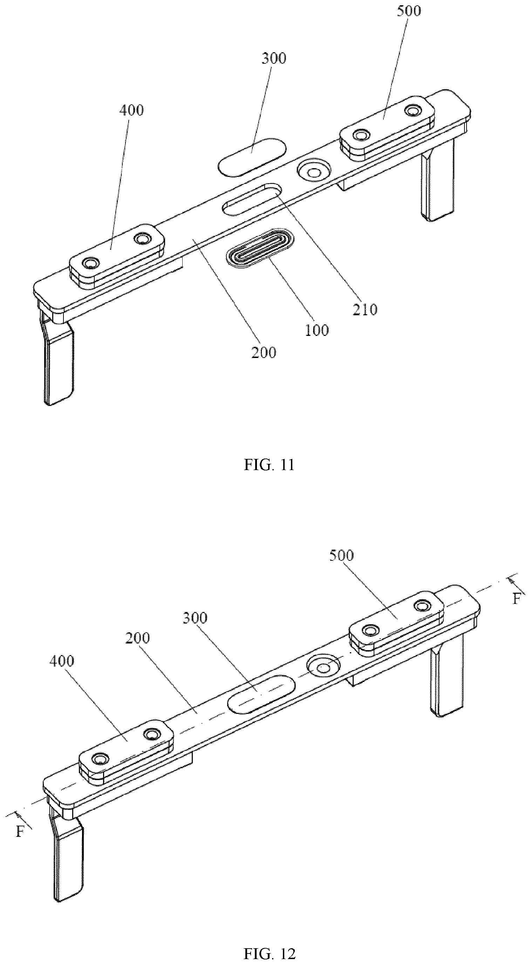

As shown in FIGs. 10 to 14, the sixth embodiment of the present application provides a top cover assembly. The top cover assembly includes a top cover 200 and the explosion-proof valve 100 of the above embodiments. The top cover 200 is provided with an explosion-proof hole 210 matched with the mounting part 110, and the mounting part 110 is mounted in the explosion-proof hole 210 to hermetically connect the explosion-proof valve 100 to the top cover 200.

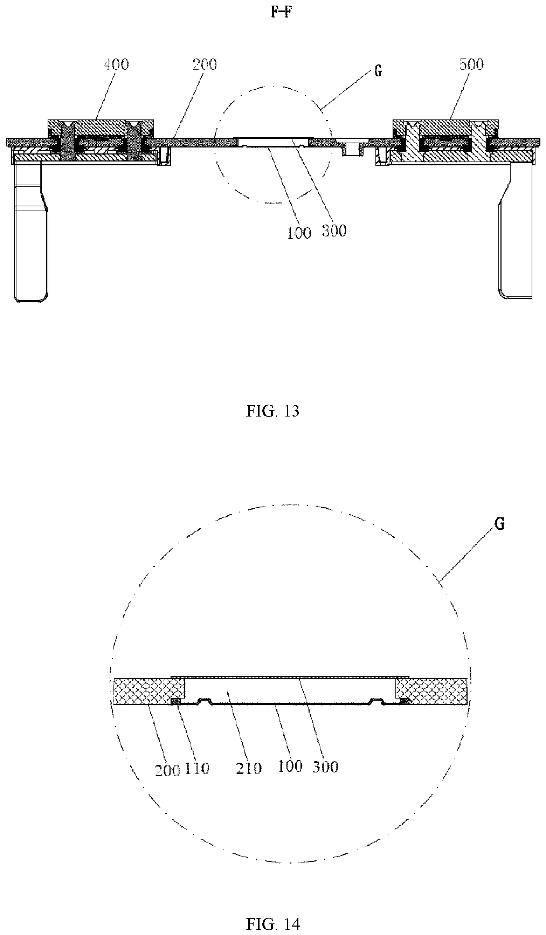

In the sixth embodiment, as shown in FIGs. 13 and 14, the explosion-proof hole 210 is a stepped hole, the mounting part 110 is an annular boss matched with the stepped hole, and a thickness of the annular boss ranges from 0.1 mm to 2.0 mm. Preferably, a thickness of the annular boss ranges from 0.3 mm to 1.0 mm.

In the sixth embodiment, as shown in FIGs. 10 and 14, the top cover assembly further includes an explosion-proof valve protective diaphragm 300. The explosion-proof valve protective diaphragm 300 is attached to an outer surface of the top cover 200 and completely covers the explosion-proof hole 210 to prevent electrolyte or other impurities from polluting the explosion-proof valve 100.

The top cover 200 is further provided with a positive electrode terminal 400 and a negative electrode terminal 500 at both ends in a length direction thereof. When the top cover assembly is mounted at an opening of the shell of the battery, the positive electrode terminal 400 and the negative electrode terminal 500 are respectively configured for electrically connecting a positive plate and a negative plate of a battery cell inside the shell.

In the top cover assembly provided by the sixth embodiment of the present application, as the explosion-proof valve of the above embodiments is hermetically connected on the top cover, when the explosion-proof valve is influenced by external factors which are easy to cause stress concentration in the weak part in the preparation process or in the application scene, the first buffer part can generate flexible deformation, so as to provide a certain amount of flexible deformation to buffer the weak part, thereby avoiding excessive stress in the weak part, weakening the impact on the explosion-proof valve, ensuring application reliability of the explosion-proof valve and preventing the explosion-proof valve from rapidly fatiguing due to the influence, thus achieving a purpose of prolonging a service life of the explosion-proof valve.

### Seventh embodiment

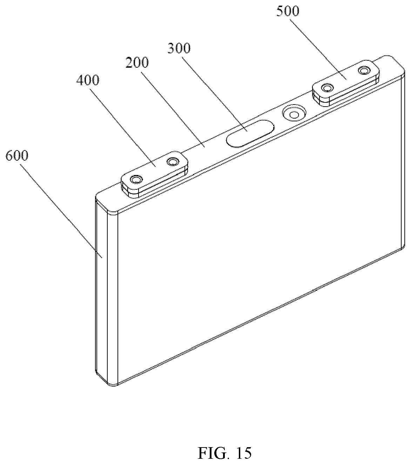

As shown in FIG. 15, the seventh embodiment of the present application provides a battery. The battery includes a shell 600, a battery cell wrapped by the shell (not shown in the figure) and a top cover assembly for sealing the shell 600. The top cover assembly is the top cover assembly provided by the sixth embodiment above. The battery cell includes a positive plate, a negative plate and a diaphragm arranged between the positive plate and the negative plate, and the positive electrode terminal 400 and the negative electrode terminal 500 mounted on the top cover 200 are respectively configured for electrically connecting the positive plate and the negative plate of the battery cell.

In the battery provided by the seventh embodiment of the present application, as the top cover assembly adopts the explosion-proof valve of the above embodiments, when the explosion-proof valve is influenced by external factors which are easy to cause stress concentration in the weak part in the preparation process or in the application scene, the first buffer part can generate flexible deformation, so as to provide a certain amount of flexible deformation to buffer the weak part, thereby avoiding excessive stress in the weak part, weakening the impact on the explosion-proof valve, ensuring application reliability of the explosion-proof valve and preventing the explosion-proof valve from rapidly fatiguing due to the influence. Finally, the service life and application reliability of the battery are also improved.

Those described above are merely preferred embodiments of the present application, but are not intended to limit the present application. Any modifications, equivalent substitutions and improvements made without departing from the gist and principle of the present application shall all fall in the scope of protection of the present application.

## Claims

1. An explosion-proof valve, comprising a mounting part and a body part, wherein the mounting part is arranged on a peripheral edge of the body part, and the mounting part is configured for hermetically connecting the explosion-proof valve to a top cover assembly;
the body part comprises a weak part and a first buffer part, the weak part is arranged between the mounting part and the first buffer part, or the weak part is arranged on the first buffer part; and
the weak part is located at a position with a minimum explosive pressure on the explosion-proof valve, and is configured to open the explosion-proof valve when an air pressure in an inner space of the top cover assembly reaches an opening threshold of the explosion-proof valve.

2. The explosion-proof valve according to claim 1, wherein the first buffer part has a convex hull structure formed on the body part and protruding along a thickness direction of the explosion-proof valve.

3. The explosion-proof valve according to claim 2, wherein a range of an included angle formed by a side part of the convex hull structure and a top of the convex hull structure is a closed interval of 90° to 180°.

4. The explosion-proof valve according to claim 2, wherein a wall thickness of a side part of the convex hull structure is not greater than a maximum wall thickness of the body part.

5. The explosion-proof valve according to claim 2, wherein a wall thickness of a side part of the convex hull structure decreases uniformly from one end of the side part of the convex hull structure facing away from a top of the convex hull structure to one end of the side part of the convex hull structure close to the top of the convex hull structure.

6. The explosion-proof valve according to claim 2, wherein a wall thickness of a side part of the convex hull structure is not greater than a wall thickness of a top of the convex hull structure.

7. The explosion-proof valve according to claim 1, wherein when the weak part is arranged between the mounting part and the first buffer part, the body part further comprises a connecting part, the connecting part is arranged between the weak part and the first buffer part, and the first buffer part has a thin-walled structure with a wall thickness smaller than a wall thickness of the connecting part.

8. The explosion-proof valve according to claim 1, wherein the body part further comprises a second buffer part, the second buffer part is arranged between the weak part and the mounting part, and the second buffer part has a flexibly deformable structure.

9. The explosion-proof valve according to claim 1, wherein the body part further comprises a third buffer part, and the third buffer part has a convex hull structure formed in an area surrounded by the first buffer part on the body part and protruding along the thickness direction of the explosion-proof valve.

10. A top cover assembly, comprising a top cover and the explosion-proof valve according to any one of claims 1 to 9, wherein the top cover is provided with an explosion-proof hole matched with the mounting part, and the mounting part is mounted in the explosion-proof hole to hermetically connect the explosion-proof valve to the top cover.

11. The top cover assembly according to claim 10, wherein the explosion-proof hole is a stepped hole, the mounting part is an annular boss matched with the stepped hole, and a thickness of the annular boss ranges from 0.1 mm to 2.0 mm.

12. The top cover assembly according to claim 11, wherein a thickness of the annular boss ranges from 0.3 mm to 1.0 mm.

13. A battery, comprising a shell, a battery cell wrapped by the shell, and the top cover assembly according to any one of claims 10 to 12 for sealing the shell, wherein a positive electrode terminal and a negative electrode terminal are mounted on the top cover, the battery cell comprises a positive plate, a negative plate and a diaphragm arranged between the positive plate and the negative plate, and the positive electrode terminal and the negative electrode terminal are respectively configured for electrically connecting the positive plate and the negative plate of the battery cell.
